# EUROPEAN PATENT APPLICATION

(11) **EP 1 635 582 A2**
(43) Date of publication of application: **15.03.2006**
(21) Application number: 05255328.6
(22) Date of filing: 31.08.2005
(51) Int. Cl.: H04N 7/58, H04N 5/44

(54) **Data receiver**

(30) Priority: 03.09.2004 JP 2004256575
(71) Applicant: SONY CORPORATION, Tokyo 141-0001 (JP)
(72) Inventor: Yamashita, Shigeyuki, Tokyo 141-0001 (JP)
(74) Representative: Turner, James Arthur

(57) **Abstract**

The present invention relates to an improved data receiver capable of performing efficient serial transmission of a plurality of channels of HD-SDI signals. The receiver includes a bit/word synchronism setting section for detecting synchronous word data having a particular bit array from the received multiplexed word array data based on a first serial digital video signal constituting bit array data having a bit rate of 10 Gb/s, and setting a shift rate for the multiplexed word array data according to a result of detection of synchronous word data, and obtains a plurality of channels of second serial digital video signals constituting bit array data each having a bit rate as defined in the standard based on the multiplexed word array transmitted therefrom.

## Description

This invention relates to data receivers.

In the field of video signals, efforts for digitalization are very active for realization of diversification of transmitted information and higher quality of reproduced video signals, and already there have become widespread, for instance, a high definition Television (HDTV) treating digital video signals based on digital data indicating video signal information and the like. Digital video signals (described as HD signals hereinafter) treated by the HDTV system are formed as word array data having a prespecified data format, and the data format is classified to the Y, C_{B}/C_{R} format based on the data type parallel device configuration in which Y-data stream and C_{B}/C_{R}-data stream are arrayed in parallel to each other and G, B, R format based on the data type parallel device configuration in which G-data stream, B-data stream, and R-data stream are arrayed in parallel to each other. In a case of an HD signal based on the Y, C_{B}/C_{R} format, Y indicates a brightness signal and C_{B}/C_{R} indicates a color difference signal. In a case of an HD signal based on the G, B, R format, G, B, and R indicate a green elementary color signal, a blue elementary color signal, and a red elementary color signal respectively.

When the HD signal as described above is transmitted through a signal transmission path including a coaxial cable, an optical signal transmission cable or the like, it is desired to convert the HD signal from the word array data to the bit array data (serial digital video signal) and serially transmit the converted HD signal for simplification of a structure of the signal transmission path. For serial transmission of HD signals, a standard introduced by the US SMPTE (Society of Motion Picture and Television Engineers) is generally employed, and signal transmission is performed based on the HD SDI (High Definition Serial Digital Interface) based on SMPTE 292M which is a standard introduced by SMPTE, for example SMPTE STANDARD SMPTE 292M-1998, for Television - Bit-Serial Digital Interface for High-Definition Television Systems (hereinafter referred to as Non-Patent document1).

In signal transmission based on the HD SDI, serial digital video signals, which are bit array data transmitted through a signal transmission path built with a coaxial cable, an optical signal transmission cable and the like, are required by the standard to be transmitted at the data rate (bit rate) of 1.485 Gb/s or 1.485/1.001 Gb/s (each of these bit rates is described as 1.485 Gb/s in this specification). Namely in transmission of serial digital video signal transmitted based on the HD SDI standard (described as HD-SDI signal hereinafter), the HD-SDI signals are transmitted at the bit rate of 1.485 Gb/s.

An HD signal as a source of the HD-SDI signal is required to have a prespecified data format. The prespecified data format, which the HD signal as defined as described above has, is defined by such parameters as a frame rate of 24 Hz or 24/1.001 Hz (either one described as 24 Hz in this specification) or 25 Hz or 30 Hz or 30/1.1001 Hz (either one described as 30 Hz in this specification); effective line number in each frame: 1080 lines; effective word number in each line: 1920 words; word bit number (quantized bit number): 10 bits; data format of Y, C_{B}/C_{R} format, and the like.

In this situation, for the purpose to further improve resolution and quality of images reproduced from digital video signals or for other similar purposes, there have been proposed various ideas for optimizing parameters defining the data format including setting a frame rate to 60 Hz or 60/1.001 Hz (either one described as 60 Hz in this specification) or 90 Hz or 90/1.001 Hz (either one described as 90 Hz in this specification); setting a number of effective lines in each frame and a number of effective words in each line not only to 1080 lines and 1920 lines, but also to about twice of 1080 lines and 1920 words; setting a number of word bits to a number of bits over 10 bits such as 12 bits, 14 bits and the like; and further employment of G, B, R format as the data format. As examples of digital video signals responding to the ideas as described above, there are those having the data formats defined with the parameters including a frame rate: 60 Hz, a number of effective lines in each frame: 1080 lines, a number of effective words in each line: 1920 words, a word bit number: 12 bits, data format: G, B, R format and the like (described as a next generation camera signal); with the parameters including a frame rate: 90 Hz, 75 Hz or 72 Hz; a number of effective lines in each frame: 1080 lines, a number of effective words in each line: 1920 words, a word bit number: 12 bits, 13 bits, or 14 bits, a data format: G, B, R format, and the like (described as HD super motion signal hereinafter); and further with the parameters including a frame rate: 24 Hz, 25 Hz or 30 Hz, a maximum number of effective lines in each frame: 2160 line, a maximum number of effective words in each line: 4096 words, a word bit number: 12 bits, a data format; G, B, R format (described as a 4k × 2k signal hereinafter), and the like.

Also each of the next generation camera signal, HD super motion signal, 4k × 2k signal, and the like is preferably converted for transmission from a parallel digital video signal based on word array data to a serial digital video signal based on bit array data and transmitted serially.

As described above, in transmission of HD-SDI signals at the bit rate of 1.485 Gb/s as required by the standard, it is desired to simultaneously transmit a plurality of channels of HD-SDI signals each having different informational contents. To satisfy this need, now it is strongly desired to realize a transmission system capable of actually performing serial transmission of the so-called ultra-wide band width video signals such as the next generation camera signals, HD supper motion signals, 4k × 2k signals and the like. The present inventor proposed, with patent applications (Japanese Patent Application No. 2004-117851, Japanese Patent Application No. 2004-187232, and Japanese Patent Applications No. 2004-187235), a data sender and a data receiver each enabling to send/receive a plurality of channels of HD-SDI signals each having a bit rate based on the standard in the multiplexed state, and capable of performing efficient serial transmission of a plurality of channels of HD-SDI signals, and further capable of realizing serial transmission of each of the next generation camera signals, HD super motion signals, 4k × 2k signals and the like under conditions for practical use.

Even with the data sender and data receiver described above and proposed by the present inventor, there are still points to be further improved. Therefore it is expected to provide improvements for the data sender and data receiver which can efficiently perform serial transmission of a plurality of channels of HD-SDI signals each having a bit rate satisfying the standard and also can perform serial transmission of the next generation camera signals, HD super motion signals, 4k × 2k signals under conditions for practical use.

Various respective aspects and features of the invention are defined in the appended claims. Features from the dependent claims may be combined with features of the independent claims as appropriate and not merely as explicitly set out in the claims.

Embodiments of the present invention relate to a data receiver for receiving bit array data transmitted by a data sender and used for transfer of a serial digital video signal configured of a bit array data having a bit rate based on a standard.

The present invention has been made in the light of the circumstances as described above, and embodiments of the invention can provide an improved data receiver used for sending/receiving data which can efficiently perform serial transmission of a plurality of channels of HD-SDI signals each having a bit rate satisfying the standard and also can perform serial transmission of the next generation camera signals, HD super motion signals, 4k × 2k signals under conditions for practical use.

A data receiver according to an embodiment of the present invention includes a data receiving unit for receiving bit array data having a bit rate of 10 Gb/s or more as a first serial digital video image; a serial/parallel conversion multi-channel data forming unit for subjecting the bit array data having the bit rate of 10 Gb/s or more received from the data receiving unit to serial/parallel conversion and forming m channels (m: integral number of 2 or more) of bit array data each having a prespecified bit rate; a data multiplexing unit for forming multiplexing m channels of bit array data obtained from the serial/parallel conversion multi-channel data forming unit to form multiplexed word array data; a bit/word synchronism setting section for detecting synchronous word data having a particular bit array in the multiplexed word array data obtained from the data multiplexing unit and setting a bit shift rate for the multiplexed word array data in response to a detection result of the synchronous word data to establish bit synchronism and word synchronism for the multiplexed word array data; a data separating unit for obtaining n channels of word array data (n: integral number less than m) each having a prespecified word bit number by taking out word array data by first prespecified bits from the multiplexed word array data with the bit synchronism and word synchronism established in the bit/word synchronism setting section; and a plurality of parallel/serial conversion units each for receiving n channels of word array data obtained from the data separating unit to obtain n channels of second serial/digital video signals based on the n channels of word array data each having a prespecified bit rate as defined in the standard.

In a data receiver according to an embodiment of the present invention, the bit/word synchronism setting section includes a bit sifter for executing bit sift for the multiplexed word array data, and a synchronous word detecting section for detecting the synchronous word data for the multiplexed word array data from the bit shift, again repeating detection of the synchronous word data for the multiplexed word array data from the bit shift by generating further bit shift for the multiplexed word array data with the bit shifter when the synchronous word data is not detected properly, and also providing controls for fixing a bit shift rate for the multiplexed word array data with the bit shifter when the synchronous word data is properly detected.

A data receiver according to an embodiment of the present invention further includes a particular parallel digital video signal forming unit for supplying n channels of second serial digital video signals based on bit array data each having a bit rate as defined according to the standard obtained from the plurality of parallel/serial converting units and also for converting the n channels of second serial digital video signals to particular parallel digital video signals each based on word array data defined with a specific frame rate, quantized bit number, and green elemental color signal, blue elemental color signal, and red elemental color signal data streams or brightness signal and color difference signal data streams, the data streams allocated in parallel to each other and transmitting the particular parallel digital video signals.

In a data receiver according to an embodiment of the present invention as described above, bit array data having a bit rate of 10 Gb/s or more, for instance, 10.692 Gb/s is received as a first serial digital video signal; S/P conversion is performed to convert the bit array data to that having a bit rate of 10 Gb/s or more, for instance, 10.692 Gb/s to m channels of bit array data each having a prespecified bit rate, for instance, 668.25 Mb/s; and then the m channels of bit array data are multiplexed to form a multiplexed word array data. Then detection of synchronous word data having a particular bit array included in the multiplexed word array data is performed, and a bit shift rate is set for the multiplexed word array data according to a result of detection, so that bit synchronism and word synchronism for the multiplexed word array data are established.

Establishment of bit synchronism and word synchronism for the multiplexed word array data is performed, for instance, in the situation where a bit shifter for performing bit shift for multiplexed word array data is provided, by detecting synchronous word data for multiplexed word array data from the bit shift and generating further bit shift in the multiplexed word array data in the bit shifter, when synchronous word data is not detected properly, to again execute the processing for detecting synchronous word data for the multiplexed word array data from the bit shift. With the functional configuration as described above, when synchronous word data is detected properly, a bit shift rate for the multiplexed word array data is fixed by the bit shifter.

Then a first prespecified number of bits, for instance, 250 bits are taken out in repetition from the multiplexed word array data with bit synchronism and word synchronism established, so that n channels of word array data each having a prespecified number of bits, for instance, 50 bits are formed. Then P/S conversion is performed to each of the n channels of word array data to obtain n channels of second serial digital video signals, for instance, HD-SDI signals, based on bit array data having a bit rate as defined in the standard, for instance, 1.485 Gb/s.

Further n channels of second serial digital video signals each having a bit rate as defined in the standard, for instance, 1.485 Gb/s are converted to particular parallel/digital video signals based on word array data defined with a particular frame rate and a number of quantized bits and also including green elemental color signals, blue elementary color signals, and red elementary color signals data streams, or brightness signals and color difference signals allocated in parallel to each other.

With a data receiver according to an embodiment of the present invention as described above, when bit array data having a bit rate of 10 b/s or more, for instance, 10.692 Gb/s is received as a first serial digital video data and the bit rate of 10 b/s or more, for instance, 10.692 Gb/s is formed by subjecting multiplexing processing to n channels of bit array data each having a bit rate as defined in the standard, n channels of second serial digital video signals based on bit array data each having a bit rate as defined in the standard are reproduced, as, for instance, n channels of HD-SID signals, from the received bit array data with the bit rate of 10 b/s or more, for instance, 10.692 Gb/s. When the bit array data having a bit rate of 10 Gb/s or more, for instance, 10.692 Gb/s is formed is formed based on particular parallel digital video signals, n channels of second serial digital video signals based on bit array data each having a bit rate as defined in the standard and allowing for reproduction of particular parallel digital video signals can be obtained from the bit array data having a bit rate of 10 b/s or more, for instance, 10.692 Gb/s.

Further, both in a case where n channels of second serial digital video signals based on bit array data each having a bit rate as defined in the standard as, for instance, n channels of HD-SDI signals are reproduced, and in a case where the n channels of second serial digital video signals based on bit array data each having a bit rate as defined in the standard and allowing for reproduction of particular parallel digital video signals are obtained, bit array data having a bit rate of 10 Gb/s or more, for instance, 10.692 Gb/s is subjected to S/P conversion to form m channels of bit array data each having a prespecified bit rate, for instance, 668.25 Mb/s, and then the m channels of bit array data are multiplexed to form multiplexed word array data. Further, synchronous word data having a particular bit array included in the multiplexed word array data is detected, and a bit shift rate is set for the multiplexed word array data according to a result of detection, and therefore bit synchronism and word synchronism for the multiplexed word array data are established. Further n channels of word array data are formed from the multiplexed word array data with the bit synchronism and word synchronism having been established, and each of the channels of word array data is subjected to P/S conversion, so that the n channels of second serial digital video signals based on bit array data having a bit rate as defined in the standard are obtained. With this configuration as described above, formation of the target second serial digital video signals can properly and accurately be performed regardless of timing of incoming bits for the bit array data having a bit rate of 10 Gb/s or more, for instance, 10.692 Gb/s received as the first serial digital video signals.

The invention will now be described by way of example with reference to the accompanying drawings, throughout which like parts are referred to by like references, and in which:
Fig. 1 is a block diagram showing an example of a data receiver according to the present invention;
Fig. 2 is a block diagram showing an example of the data sender for sending data received with the example of data receiver according to the present invention;
Fig. 3 is a conceptual view showing a data format used for description of operations of the data sender shown in Fig. 2;
Fig. 4 is a block diagram used for description of an example of the data sender shown in Fig. 2;
Fig. 5 is a conceptual view showing a data format used for description of operations of the data sender shown in Fig. 2;
Fig. 6 is a conceptual view showing a data format used for description of operations of the data sender shown in Fig. 2;
Figs. 7A and 7B are conceptual views showing a data format used for description of operations of the data sender shown in Fig. 2;
Fig. 8 is a block diagram showing specific configuration of a bit/word synchronism setting section in an example of the data receiver according to the present invention; and
Fig. 9 is a block diagram showing specific configuration of a serial data forming section in an example of the data receiver according to the present invention.

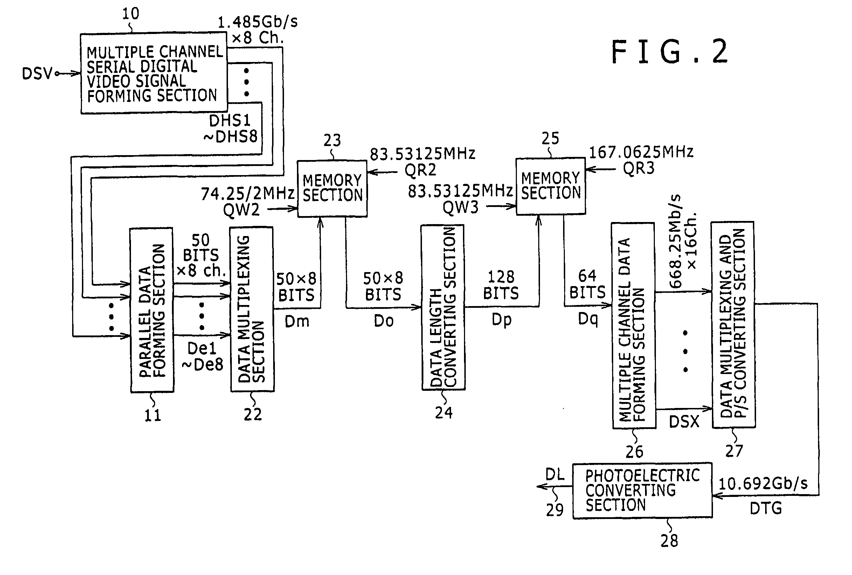

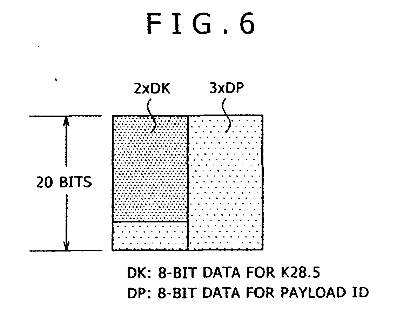

Prior to detailed description of examples of the data receiver according to the present invention, at first an example of a data sender for sending data received in this example is described with reference to Fig. 2 to Fig. 7.

Fig. 2 is a view showing an example of the data sender. In the data sender shown in Fig. 2, a 4k × 2k signal DSV, which is a parallel digital video signal defined with a frame rate of 24 Hz or 25 Hz, the number of effective lines in each frame of, for instance, 2160 lines, the number of effective words in each line of, for instance, 4096 words, the word bit number of 12 bits, and a data format of G, B, R format, is supplied to a multiple-channel serial digital video signal forming section 10. In this 4k × 2k signal DSV, a G-data stream, a B-data stream, and an R-data stream are allocated in parallel to each other.

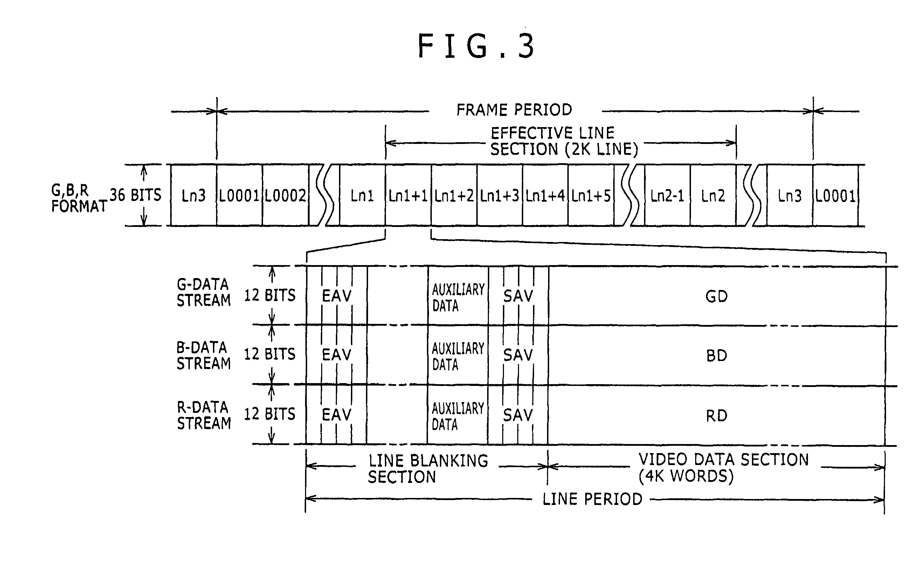

Fig. 3 shows an example of data format of the 4k × 2k signal DSV supplied to the multiple-channel serial digital video signal forming section 10.

In the example of the particular 4k × 2k signal DSV having the data format shown in Fig. 3, the G-data stream, B-data stream, and R-data stream allocated in parallel and also in synchronism to each other are arrayed with a frame period of 1/24 second or 1/25 second, and each of the frame periods is formed with n3 periods from line period L0001 to line period Ln3. Further, an effective line section in each frame period extends from a line period Ln1+1 to a line period Ln2, and the number of lines in the effective line section in each frame period, namely, the number of effective lines 2k is set to a range expressed by the expression of 2k = n2 - nl lines. 2k is, for instance, 2160. Further, the number of effective words constituting a video data section in each line period is set to 4k words. 4k is, for instance, 4096. The word bit number is 12 bits.

With the configuration as described above, each of the line periods L0001 to Ln3 in each frame period includes a line period for the G-data stream with the word bit number of 12 bits, a line period for the B-data stream with the word bit number of 12 bits, and a line period for the R-data stream with the word bit number of 12 bits, and especially in each of the line periods Ln1+1 to Ln2 forming the effective line section, as shown in Fig. 3 showing the state during the line period Ln1+1, which is one of the periods described above, each of the line period for the G-data stream with the word but number of 12 bits, line period of B-data stream with the word bit number of 12 bits, and line period for the R-data stream with the word bit number of 12 bits includes a line blanking section and a video data section.

Each of line blanking section includes timing reference code: EAV (End of Active Video) provided at the starting edge section, and also includes timing reference code: SAV (Start of Active Video) provided at the ending edge section and auxiliary data provided between the EAV and SAV. On the other hand, as for the video data section, the video data section in the G-data stream includes G-data GD indicating 4k-word green elemental color information wherein 4k indicates the number of effective words; the video data section in the B-data stream includes B-data BD indicating 4k-word blue elemental color information wherein 4k indicates the number of effective words; and further the video data section in the R-data stream includes 4k-word red elemental color information wherein 4k indicates the number of effective word.

In the multiple-channel serial digital video signal forming section 10, a 4k × 2k signal DSV supplied thereto is converted to n channels of HD-SDI signals (n: positive integral number), for instance to HD-SDI signals DHS1 to DHS8, which are eight channels (n = 8) serial digital video signals. In this step, the technique is employed for forming Link A and Link B word array data (Link A and Link B indicating word array data with the word bit number of 20 bits respectively) based on the SMTPE STANDARD SMPTE 372M, for Television-Dual Link 292M Interface for 1920 × 1080 Picture Raster which is a standard introduced by SMPTE. With this technique, 4 channels of data each channel based on a pair of Link A and Link B are formed based on the 4k × 2k signal DSV, and each of the totally eight channels of Link A and Link B data streams is converted to bit array data to form eight channels of HD-SDI signals DHS 1 to DHS8.

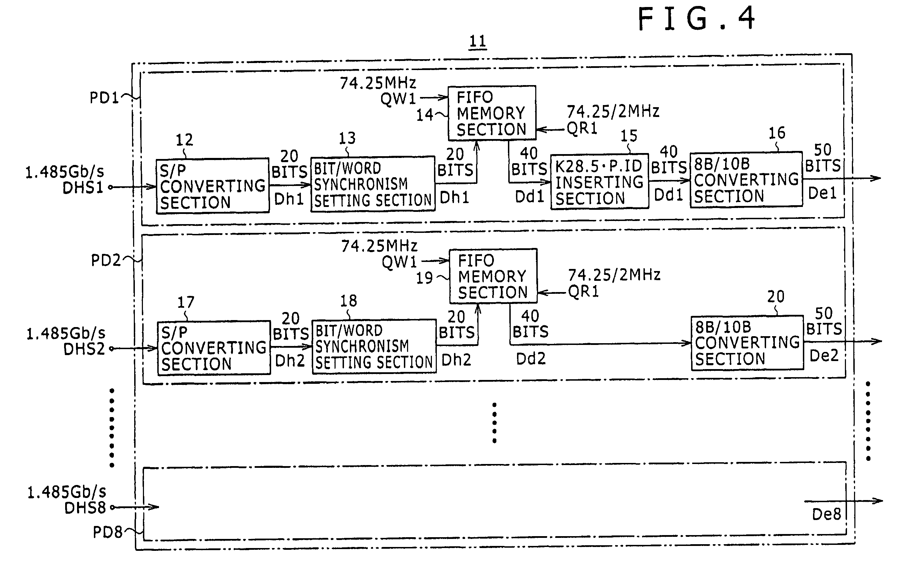

The eight channels of HD-SDI signals DHS1 to DHS8 obtained from the multiple-channel serial digital video signal forming section 10 are supplied to the parallel data forming section 11. The parallel data forming section 11 incorporates therein a data processing section PD1 for the HD-SDI signal DHS1, a data processing section PD2 for the HD-SDI signal DHS2, ... and a data processing section PD8 for the HD-SDI signal DHS8 as shown in Fig. 4.

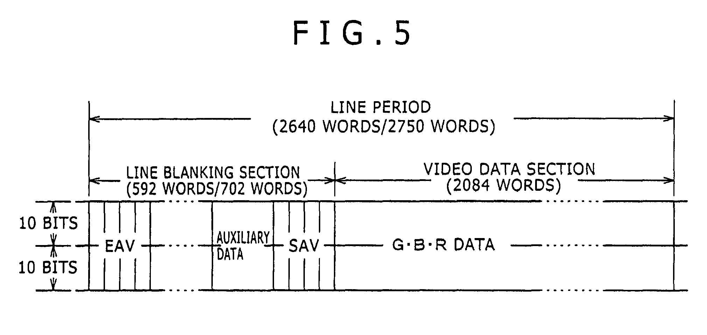

In the data processing section PD1, the HD-SDI signal DHS1 supplied thereto is subjected to S/P conversion performed in the S/P converting section 12, and is converted, for instance, to word array data Dh1 constituting an HD signal which is a parallel digital video signal having the line data structure as shown in Fig. 5. The line data structure shown in Fig. 5 includes a line blanking section with the word bit number of 20 bits and a video data section. The line blanking section includes timing reference code data: EAV (End of Active Video) constituting four words at the starting edge section, and also includes timing reference code data: SAV (Start of Active Video) constituting four words at the ending edge section and auxiliary data provided between the EAV and SAV. The word number is 592 words (in a case where the frame rate is 1/25 second), or 702 words (in a case where the frame rate is 1/24 second). Further, the video data section includes, as video data, G data indicating green elemental color signal information, B data indicating blue elemental color signal information, and R data indicating red elemental color signal information, and the word number therein is 2048 words. Therefore, a total number of words in one line is 2640 words (in a case where the frame rate is 1/25 second) or 2750 words (in a case where the frame rate is 1/24 second). Further, the word rate is 74.25 Mb/s or 74.25/1.001 Mb/s (either case described as 74.25 Mb/s hereinafter in the present application). The number of words in the video data section may be 1920 words in place of 2048 words.

The four words forming each of EAV and SAV is expressed with the form of 3FF,000,000,XYZ in the hexadecimal expression. 3FF and 000 are "inhibited code" not used as a word in the video data section, and the combination of 3FF,000,000,XYZ does not appear in the video data. The auxiliary data allocated between EAV and SAV may include ID data: Payload ID indicating information for video data of the HD signal according to the necessity.

The word array data Dh1 obtained from the S/P converting section 12 is supplied to a bit/word synchronism setting section 13. In the bit/word synchronism setting section 13, detection of timing reference code data EAV and SAV included in the word array data Dh1 is performed, and the bit synchronism and word synchronism are established according to a result of detection thereof, and further a frame rate of the word array data Dh 1 is detected.

The word array data Dh1 sent through the bit/word synchronism setting section 13 is written in a FIFO memory section 14 with a write clock signal QW 1 and having a frequency of 74.25 MHz by 20 bits. The word array data Dh1 written in the FIFO memory section 14 is read out with a read clock signal QR1 having a frequency of 74.25/2 MHz = 37.125 MHz by 40 bits, and is supplied as the word array data Dd1 to the K28.5 P.ID inserting section 15.

In the K28.5 P.ID inserting section 15, data inserting processing for inserting 8-bit word data DK and DP is performed by replacing 40 bits in a header section of the timing reference code data: EAV or SAV in each line blanking section of the word array data Dd1 with two sets of 8-bit word data DK and three sets of 8-bit word data DP.

Each of the two sets of 8-bit word data DK is subjected to the 8B/10B converting processing and converted to 10-bit word data referred to as "K28.5" and not used as word data indicating video signal information which functions as synchronous word data. Further, the three sets of 8-bit word data are three 8-bit word data corresponding to first to third words among the four words constituting ID data: Payload ID included as auxiliary data in the word array data Dh1, and is converted to data functioning as ID data: Payload ID.

From the K28.5 P.ID inserting section 15, the word array data Dd1 with two sets of 8-bit word data DK and three sets of 8-bit word data DP having been inserted thereto is sent by 40 bits and is supplied to an 8B/10B converting section 16. In the 8B/10B converting section 16, 8B/10B conversion is performed to successively convert each 40-bit data to 50-bit data and word array data De1 is formed. Then from the 8B/10B converting section 16, the word array data De1 is sent out by 50 bits, which is treated as output data from the data processing section PD1.

In the data processing section PD2, the HD-SDI signal DHS2 supplied thereto is subjected to S/P conversion in the S/P converting section 17, and is converted to word array data Dh2 constituting an HD signal which is a parallel digital video signal having the line data structure as shown in Fig. 5. The word array data Dh2 obtained from the S/P converting section 17 is supplied to a bit/word synchronism setting section 18. In the bit/word synchronism setting section 18, detection of the timing reference code data: EAV and SAV included in the word array data Dh2 is performed, and bit synchronism and word synchronism are established when the timing reference code is detected.

The word array data Dh2 passing through the bit/word synchronism setting section 18 is written in a FIFO memory section 19 with a write clock signal QW1 with a frequency of 74.25 MHz by 20 bits. The word array data Dh2 written in the FIFO memory section 19 is read out with a read clock signal QR1 with a frequency of 74.25/2 MHz = 37.125 MHz by 40 bits, and is supplied as word array data Dh2 to an 8B/10B converting section 20. In the 8B/10B converting section 20, the 8B/10 conversion is performed for the word array data Dh2 to successively converts 40 bits to 50 bits with word array data De2 formed. Then, the word array data De2 is set out by 50 bits from the 8B/10B converting section 20, which is treated as output data from the data processing section PD2.

Also in each of data processing sections PD3 to PD8, the same processing as that performed in the data processing section PD2 to the HD-SDI signal DHS2 supplied thereto is performed to each of the HD-SDI signals DHS3 to DHS8 respectively to obtain word array data De3 to De8, and each of the word array data De3 to De8 is sent as output data by 50 bits, respectively.

The word array data De1 to De8 each obtained as output data from the data processing sections PD1 to PD8 incorporated in the parallel data forming section 11 are sent as eight channels of word array data from the parallel data forming section I I to a data multiplexing section 22.

The multiplexed word array data Dm formed in the data multiplexing section 22 is 10-bit word array data and includes, in the line data configuration thereof, a line blanking section obtained by multiplexing line blanking sections in the word array data De1 to De8 and a video data section obtained by multiplexing video data sections in the word array data De1 to De8. In a header section of multiplexed EAV or SAV in a line blanking section of the multiplexed word array data Dm, which is 10-bit word array data having the configuration as described above, 2-byte K28.5 and 3-byte ID data are provided. The ID data is payload ID based on the two sets of 8-bit word array data DK substituted into the data processing section PD1 incorporated in the parallel data forming section 11 and three sets of 8-bit ward data DP respectively.

The multiplexed word array data Dm obtained from the data multiplexing section 22 is written in the memory section 23 with a write clock signal QW2 with a frequency of 74.25/2 MHz = 37.125 MHz by 50 × 8 bits. The multiplexed word array data Dm written in the memory section 23 as described above is read out with a read clock signal QR2 with a frequency of 83.5312 MHz by 50 × 8 bits and is supplied to a data length converting section 24 as word array data Do.

In the data length converting section 24, the data length converting processing for successively changing the 50 × 8 bits to 28 bits is performed to the word array data Do to form word array data Dp. In this step, additional data for transfer rate adjustment is added to the word array data Dp according to the necessity, and when any additional data is added, the additional data includes 0-bit word data referred to "K28.3" indicating 2-byte video signal information and not used as word data.

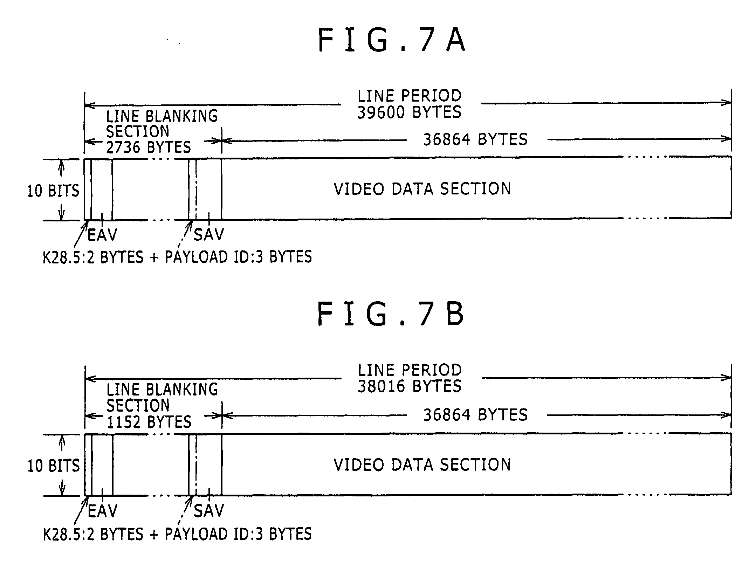

The word array data Dp as described above has a line data structure shown, for instance, in Fig. 7A. The 4k × 2k signal DSV supplied to the multiple-channel serial digital video signal forming section 10 has a frame rate of 24 Hz, and the 8 channels of HD-SDI signals DHS1 to DHS8 based on the 4k × 2k signal DSV is supplied to the parallel data forming section 11. The data Dp also has a line data structure as shown, for instance, in Fig. 7B. The 4k × 2k signal DSV supplied to the multiple-channel serial digital video signal 10 has a frame rate of 25 Hz, and the 8 channels of HD-SDI signals DHS 1 to DHS8 based on the 4k × 2k signal DSV are supplied to the parallel data forming section 11. In the data structure shown in Fig. 7A or Fig. 7B, 2-byte K28.5 and 3-byte ID data, Payload ID, are provided in a header section of the timing reference code data, EAV or SAV, in the line blanking section.

The word array data Dp obtained from the word length converting section 24 is written in the memory section 25 with a write clock signal QW3 with a frequency of 83.53125 MHz by 128 bits. Then the word array data Dp written in the memory section 25 is read out from the memory section 25 with a read clock signal QR3 with a frequency of 83.53125 × 2 MHz = 167.0625 MHz by 64 bits, and is supplied as word array data Dq to a multi-channel data forming section 26.

The multi-channel data forming section 26 forms m channels (m: integral value larger than n), for instance, 16 channels (m = 16) of bit array data DSX each having a bit rate of 668.25 Mb/s based on the word array data Dp supplied by 64 bits with a frequency of 1/167.0625 MHz. The 16 channels of bit array data DSX obtained from the multi-channel data forming section 26 is supplied to a data multiplexing and P/S converting section 27.

The data multiplexing and P/S converting section 27 multiplexes the 16 channels of bit array data DSX, and subjects the resultant parallel data to P/S conversion to form bit array data DTG with a bit rate of 10 Gb/s or more, for instance, 668.25 Mb/s × 16 = 10.692 Gb/s. The bit array data DTG obtained from the data multiplexing and P/S converting section 27 as described above is formed based on the n channels of HD-SDI DHS 1 to DHSn supplied to the parallel data forming section 11, and therefore the bit array data DTG is a serial digital video signal based on bit array data with a bit rate of 10 Gb/s or more, for instance, 10.692 Gb/s.

The bit array data DTG obtained from the data multiplexing and P/S converting section 27 is supplied to a photoelectric transfer section 28 forming a data transmitting section. The photoelectric transfer section 28 converts the bit array data DTG to an optical signal DL, and transmits the optical signal DL through an optical signal transmission cable 29 formed with an optical fiber or the like.

The data sender as shown in Fig. 2 can subject, for instance, 8 channels of HD-SDI signals DSH1 to DHS8 to the multiplexing processing, then converts the multiplexed signal to bit array data DTG with the bit rate of 10 Gb/s or more, for instance, a bit rate of 10.692 Gb/s, and send out the bit array data DTG for transmission. Therefore, the HD-SDI signal having a bit rate of 1.485 Gb/s based on the standard can efficiently be multiplexed and transmitted serially.

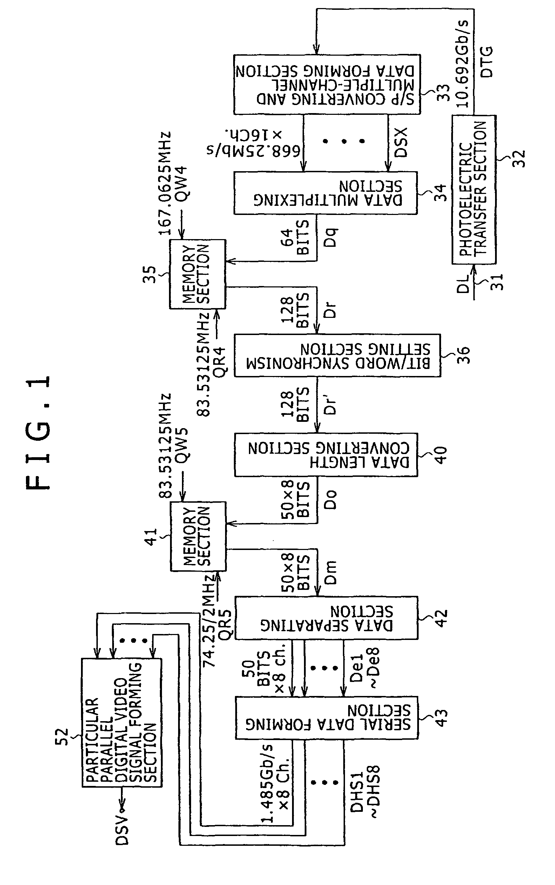

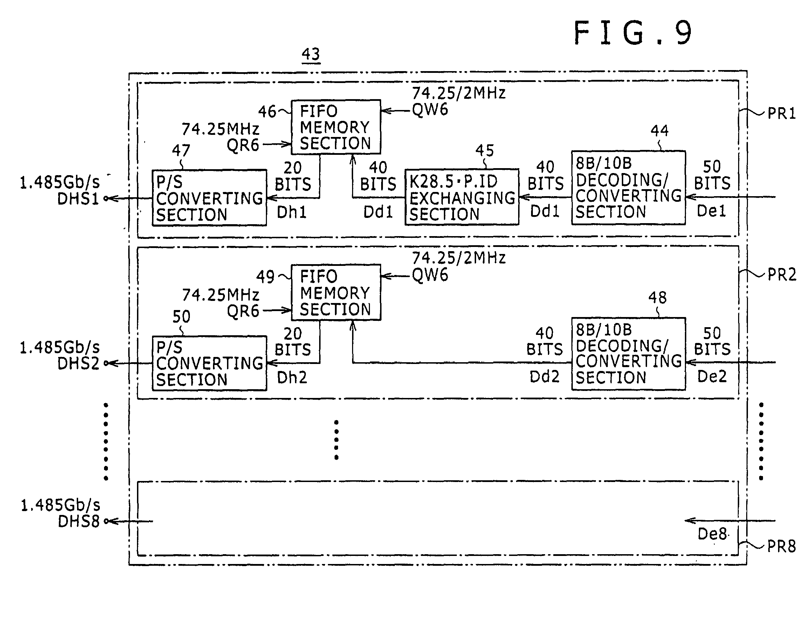

An example of the data receiver according to an embodiment of the present invention for receiving bit array data DTG transmitted as an optical signal DL from the data sender shown in Fig. 2 is described mainly with reference to Fig. 1, Fig. 8, and Fig. 9.

Fig. 1 shows an example of the data receiver according to an embodiment of the present invention.

In the example shown in Fig. 1, an optical signal DL arriving coming in through an optical signal transmission cable 31 formed with an optical fiber or the like is received by a photoelectric transfer section 32 forming a data receiving unit. The optical signal DL is obtained by converting the bit array data DTG transmitted from the data sender shown in Fig. 2 and having a bit rate of 10 Gb/s or more, for instance, 10. 692 Gb/s.

The photoelectric transfer section 32 receives the optical signal DL and converts the optical signal DL to the bit array data DTG having a bit rate of 10 Gb/s or more, for instance, 10. 692 Gb/s, and then supplies the bit array data DTG to the S/P converting and multi-channel data forming section 33. The S/P converting and multi-channel data forming section 33 subjects the bit array data DTG to S/P conversion and forms m channels, for instance 16 channels of bit array data DSX each having a bit rate of, for instance, 668.25 Mb/s based on the parallel data obtained by the S/P conversion described above. The 16 channels of bit array data DSX obtained from the S/P converting and multi-channel data forming section 33 are supplied to the data multiplexing section 34.

The data multiplexing section 34 multiplexes the 16 channels of bit array data DSX to form word array data Dq, which is multiplexed word array data. With this operation, the word array data Dq obtained from the data multiplexing section 34 is written in the memory section 35 with a write clock signal QW4 having a frequency of 167.0625 MHz by 64 bits. The word array data Dq written in the memory section 35 is read out by 128 bits with a read clock signal QR4 having a frequency of 83.53125 MHz from the memory section 35, and is supplied as word array data Dr to a bit/word synchronism setting section 36. Then the word array data Dr supplied to the bit/word synchronism setting section 36 has the line data structure as shown in Fig. 7A or in Fig. 7B.

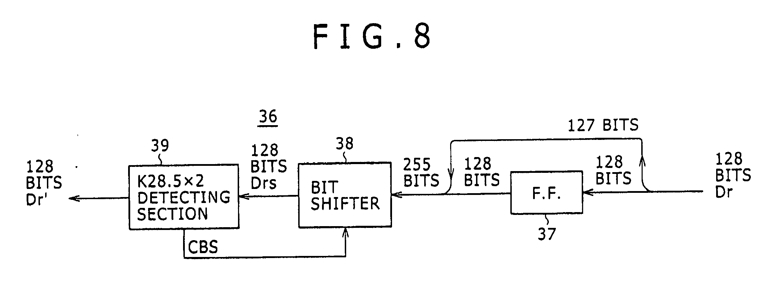

The bit/word synchronism setting section 36 includes, for instance, a flip-flop (F.F) 37, a bit shifter 38, and a K28.5 × 2 detecting section 39 as shown in Fig. 8. The K28.5 × 2 detecting section 39 constitutes a synchronous word detecting section, and sends a bit shift control signal CBS detected thereby to the bit shifter 38.

In the bit/word synchronism setting section 36, of the word array data Dr read out from the memory section 35 by 128 bits, the first 128 bits are supplied and stored in the flip-flop (F.F) 37, and the following 127 bits pass by the F.F 37. The 128 bits obtained from the F.F 37 and the 127 bits passing by the F.F. 37 are linked, and the linked bit stream is supplied to the bit shifter 38 as data divided to 128 and 127 bits = 255 bits.

Each time the bit shift control signal CBS transmitted from the K28.5 × 2 detecting section 39 comes in, the bit shifter 38 shifts the 255-bit data by 1 bit, and sends the data as two sets of 128-bit word array data Drs. When the bit shift control signal CBS transmitted from the K28.5 × 2 detecting section 39 does not come in, the bit shifter 38 does perform bit shifting for the 255-bit data. Therefore, the bit shifter 38, to which the 255-bit data is supplied, does not perform bit shifting for the 255-bit data and supplied the 128-bit word array data Drs not bit-shifted to the K28.5 × 2 detecting section 39. Then, when the bit shift control signal CBS from the K28.5 × 2 detecting section 39 comes in, each time the bit shift control signal CBS comes in, the bit shifter 38 performs bit shifting for the 255-bit data bit by bit, and supplied the bit-shifted 128-bit word array data Drs to the K28.5 × 2 detecting section 39.

The K28.5 × 2 detecting section 39 divides the 128-bit word array data Drs not having been subjected to bit shifting by the bit shifter 38 from the head hereon into 10-bits unit, and performs detection for the "K28.5" which is synchronous word data in the word array data Drs. As a result, when two or more "K28.5", which is synchronous word data in the word array data Drs, are detected successively, it is recognized that detection of the "K28.5", which is synchronous word data in the word array data Drs, is performed properly. The state where the bit shifter 38 does not execute bit shifting for the 255-bit data, namely the state where a bit shift rate the word array data Dr by the bit shifter 38 is set to 0 (zero) is effected. With this operation, bit synchronism and word synchronism for the word array data Drs are established.

When two or more "K28.5", which is synchronous word data in the word array data Drs, are not detected successively, the K28.5 × 2 detecting section 39 determines that detection for "K28.5" which is synchronous word data is not performed properly, and sends out a bit shift control signal CBS to the bit shifter 38. Then, the bit shifter 38 performs bit shifting for the 255-bit data by 1 bit respectively. The K28.5 × 2 detecting section 39 further performs detection for the "K28.5" which is synchronous word data in the bit-shifted 128-bit word array data Drs. The K28.5 × 2 detecting section 39 executes the processing sequence as described above until two or more "K28.5" are detected successively in the word array data Drs. When two or more "K28.5" are detected successively in the word array data Drs, the K28.5 × 2 detecting section 39 determines that detection for the "K28.5", which is synchronous word data, has been made properly, and effects the state in which a bit shift rate for the word array data Dr by the bit shifter 38 is fixed to the bit shift rate at the point of time. With this operation, bit synchronism and word synchronism for the word array data Drs are established.

As a result, the word array data Drs with the bit synchronism and word synchronism established therein is sent out as 128-bit word array data Dr' by and by, and the word array data Dr' with the bit synchronism and word synchronism established therein is supplied from the bit synchronism setting section 36 to the data length converting section 40.

As described above, before detection of "K28.5" for the word array data Drs by the K28.5 × 2 detecting section 39 is performed, 255-bit data based on the word array data Dr read out from the memory section 35 by 128 bits is formed and supplied to the bit shifter 38. Thus 128-bit word array data Drs is obtained from the bit shifter 38, so that, even when one "K28.5" is present on a border of the 128 bit sequence in the word array data Dr read out by 128 bits from the memory 35, detection of "K28.5" is properly performed by the K28.5 × 2 detecting section 39.

In the data length converting section 40, the word array data Dr' with bit synchronism and word synchronism established is subjected to the data length converting processing to successively change 128 bits thereof to 50 × n bits, for instance, 50 × 8 bits (n = 8), thus word array data D0 being formed. In this step, when the word array data Dr' includes additional data added in transmission, the additional data is removed.

The word Do obtained from the data length converting section 40 is by and by written with a write clock signal QW5 having a frequency of 83.53125 MHz in a memory section 41 by 50 × 8 bits. Then the word array data Do written in the memory section 41 is by and by read out from the memory section 41 with a read clock signal QR5 having a frequency of 74.25/2 MHz = 37.125 MHz by 50 × 8 bits, and is supplied as multiplexed word Dm to a data separating section 42.

In the data separating section 42, the multiplexed word array data Dm is subjected to the word separating processing, and n channels, for instance, 8 channels (n = 8) of word array data De1 to De8 are separated and taken out from the multiplexed word array data Dm. Each of the 8 channels (n = 8) of word array data De1 to De8 separated in the data separating section 42 is by and by transmitted from the data separating section 42 by 50 bits and supplied to a serial data forming section 43.

The serial data forming section 43 incorporates a data processing section PR1 for the word array data De1, a data processing section PR2 for the word array data De2, · · · and a data processing section PR8 for the word array data De8.

In the data processing section PR1, 8B/10B decoding conversion is performed to the word array data De1 supplied thereto by an 8B/10B decoding converting section 44 to by and by change 50 bits to 40 bits, thus word array data Dd1 being formed. Word array data Dd1 obtained from the 8B/10B decoding converting section 44 is supplied to a K28.5 • P.ID exchanging section 45.

In the K28.5 P.1D exchanging section 45, data exchanging processing is performed for exchanging the 8-bit word data inserted to a starting edge section of each line blanking section of the word array data Dd1 and becoming "K28.5" when 2-byte 8B/10B converting processing is executed and 8-bit word data becoming to ID data: Payload ID when 3-byte 8B/10B converting processing is executed with the timing reference code data: EAV or SAV

From the K28.5 P.ID exchanging section 45, the word array data Dd1 with the 8 bits in the starting edge section of each line blanking section thereof with 4 words constituting the timing reference code data: EAV or SAV is by and by transmitted by 40 bits, and the word array data Dd1 is written in a FIFO memory section 46 with a write clock signal QW6 having a frequency of 74.25/2 MHz = 37.125 MHz by 40 bits. Then the word array data Dd 1 written in the FIFO memory section 46 is by and by read out from the FIFO memory section 46 with a read clock signal QR6 having a frequency of 74.25 MHz by 20 bits to form word array data Dh1 constituting an HD signal which is a 20-bit word parallel digital video signal, and the word array data Dh1 is supplied to a P/S converting section 47. This word array data Dh1 has the line data structure as shown, for instance, in Fig. 5.

In the P/S converting section 47, the word array data Dh1 is subjected to P/S conversion to form an HD-SDI signal DHS1 which is a serial digital video signal based on the word array data Dh1 and having a bit rate of 1.485 Gb/s as defined in the standard. The HD-SDI signal DHS1 formed in the P/S converting section is output data from the data processing section PR 1.

In the data processing section PR2, 8B/10B conversion is performed by an 8B/10B converting section 48 to the word array data De2 supplied thereto to by and by convert 50 bits to 40 bits, thus word array data Dd2 being formed. The word array data Dd2 obtained from the 8B/10B decoding converting section 48 is by and by written in an FIFO memory section 49 with a write clock signal QW6 having a frequency of 74.25/2 MHz = 37.125 MHz by 40 bits.

Then the word array data Dd2 written in the FIFO memory section 49 is by and by read out from the FIFO memory section 49 with a read clock signal QR6 having a frequency of 74.25 MHz by 20 bits to form word array data Dh2 constituting an HD signal which is a 20-bit word parallel digital video signal, and the word array data Dh2 is supplied to the P/S converting section 50. Also the word array data Dh2 has the line data structure as shown, for instance, in Fig. 5.

In the P/S converting section 50, the word array data Dh2 is subjected to P/S conversion to form an HD-SDI signal DHS2 which is a serial digital video signal having a bit rate of 485 Gb/s. Then the HD-SDI signal DHS2 formed in this P/S converting section 50 is output data from the data processing PR2.

Each of the data processing sections PR3 to PR8 is the same as the data processing section PR2, and the same processing as that performed to the word array data De2 is performed to each of the word array data De3 to De8 supplied to the data processing sections PR3 to PR8 respectively, and the HD-SDI signals DHS3 to DHS8 each having a bit rate of 1.485 Gb/s as defined in the standard are obtained from output data from the data processing sections PR3 to PR8.

The 8 channels of HD-SDI signals DHS1 to DHS8 obtained as output data from the data processing sections PR1 to PR8 respectively are transmitted as reproduced HD-SDI signals from a serial data forming section 43.

The 8 channels of HD-SDI signals DHS1 to DHS8 transmitted from the serial data forming section 43 are supplied to a particular parallel digital video signal forming section 50. In the particular parallel digital video signal forming section 52, when each of the 8 channels of HD-SDI signals DHS 1 to DHS8 includes auxiliary bits added in the sender, the additional bit is removed, and the signal is converted to a 4k × 2k signal DSV having a frame rate of 1/24 second or 1/25 second. With this operation, the 4k × 2k signal DSV having a frame rate of 1/24 second or 1/25 second reproduced on the bit array data DTG having a bit rate of 10 Gb/s or more, for instance, 10.692 Gb/s is transmitted from the particular parallel digital video signal forming section 52.

In the example of the data receiver according to the present invention as shown in Fig. 1, for instance, bit array data DTG having a bit rate of 10 Gb/s or more, for instance, 10.692 Gb/s is received; bit synchronism and word synchronism are established for the word array data based on the received bit array data DTG; and then n channels, for instance, 8 channels of HD-SDI signals DHS1 to DHS8 which are 8 channels of serial digital video signals, are obtained based on the word array data, and thus the 4k × 2k signal DSV having a frame rate of 1/24 second or 1/25 second can be reproduced. Therefore, with the receiver for serial transmission of the 4k × 2k signal DSV categorized as a ultra-wide band width video signal, reproduction of the 8 channels of HD-SDI signals DHS1 to DHS8 and further reproduction of the 4k × 2k signal can properly and accurately be performed regardless of the in-coming bit timing of the bit array data DTG having a bit rate of, for instance, 10.692 Gb/s.

In the example shown in FIG. 1, there is provided the particular parallel digital video signal forming section 52 is provided for receiving the 8 channels of HD-SDI signals DHS1 to DHS8 transmitted from the serial data forming section 43, but with the data receiver according the invention described in any of claims 1 to 9 excluding claim 5, it is not always required to provide the particular parallel digital video signal forming section corresponding to the particular parallel digital video signal forming section 52, and the plurality of channels of serial digital video signals transmitted from a serial data forming section corresponding to the serial data forming section 43 may be used as output signals.

The data receiver according to the present invention is widely applicable in the field in which digital video signals are treated for building up a data transmission system capable of efficiently transmitting a plurality of channels of HD-SDI signals based on the standard and further capable of realizing serial transmission of the so-called ultra-wide band width video signals such as next-generation camera signals, HD super-motion signals, and 4k × 2k signals.

It should be understood by those skilled in the art that various modifications, combinations, sub-combinations and alterations may occur depending on design requirements and other factors insofar as they are within the scope of the appended claims or the equivalents thereof.

## Claims

1. A data receiver comprising:
data receiving means for receiving bit array data having a bit rate of 10 Gb/s or more as a first serial digital video image;
serial/parallel conversion multi-channel data forming means for subjecting the bit array data having the bit rate of 10 Gb/s or more received from said data receiving unit to serial/parallel conversion and forming m channels (m: integral number of 2 or more) of bit array data each having a prespecified bit rate;
data multiplexing means for forming multiplexing m channels of bit array data obtained from said serial/parallel conversion multi-channel data forming means to form multiplexed word array data;
a bit/word synchronism setting section for detecting synchronous word data having a particular bit array in the multiplexed word array data obtained from said data multiplexing means and setting a bit shift rate for said multiplexed word array data in response to a detection result of said synchronous word data to establish bit synchronism and word synchronism for said multiplexed word array data;
data separating means for obtaining n channels of word array data (n: integral number less than m) each having a prespecified word bit number by taking out word array data by first prespecified bits from the multiplexed word array data with the bit synchronism and word synchronism established in said bit/word synchronism setting section; and
plurality of parallel/serial conversion means each for receiving n channels of word array data obtained from said data separating means to obtain n channels of second serial/digital video signals based on said n channels of word array data each having a prespecified bit rate as defined in the standard.

2. The data receiver according to claim 1, wherein said bit/word synchronism setting section comprises a bit sifter for executing bit sift for said multiplexed word array data, and a synchronous word detecting section for detecting said synchronous word data for the multiplexed word array data from said bit shift, again repeating detection of said synchronous word data for the multiplexed word array data from said bit shift by generating further bit shift for said multiplexed word array data with said bit shifter when said synchronous word data is not detected properly, and also providing controls for fixing a bit shift rate for said multiplexed word array data with said bit shifter when said synchronous word data is properly detected.

3. The data receiver according to claim 2, wherein said bit shifter performs bit shift for said multiplexed word array data bit by bit.

4. The data receiver according to claim 3, wherein said synchronous word detecting section determines, when synchronous word data having said particular bit array are detected by two words in succession for multiplexed word array data from said bit shift, that said synchronous word data is detected properly.

5. The data receiver according to claim 2 further comprising a particular parallel digital video signal forming means for supplying n channels of second serial digital video signals based on bit array data each having a bit rate as defined according to the standard obtained from said plurality of parallel/serial converting means and also for converting said n channels of second serial digital video signals to particular parallel digital video signals each based on word array data defined with a specific frame rate, quantized bit number, and green elemental color signal, blue elemental color signal, and red elemental color signal data streams or brightness signal and color difference signal data streams, said data streams allocated in parallel to each other and transmitting the particular parallel digital video signals.

6. The data receiver according to claim 2, wherein said data receiving means converts optical signals received through an optical signal transmission cable to bit array data having a bit rate of 10 Gb/s to obtain first serial digital video signals.

7. The data receiver according to claim 2 further comprising a memory means with multiplexed word array data obtained from said data multiplexing means written therein with a write clock signal having a first frequency and also with the multiplexed word array data read out therefrom with a read-out clock signal having a second frequency different from said first frequency.

8. The data receiver according to claim 2 further comprising a plurality of 10-bit/8-bit converting means each for receiving n channels of first word array data obtained from said data separating means and subjecting each of said n channels of first word array data to the 10 bit/8 bit converting processing by a second prespecified bit number to form n channels of second word array data based on parallel digital image signals each having a in-line data structure specified according to the standard.

9. The data receiver according to claim 8 further comprising a plurality of memory means each with any of the n channels of second word array data obtained from said 10 bit/8 bit converting means written therein and also with the written second word array data read out therefrom by said second prespecified bit number.
